# DEMANDE DE BREVET EUROPEEN

(11) **EP 0 915 248 A1**
(43) Date de publication de la demande: **12.05.1999**
(21) Numéro de dépôt: 98402760.7
(22) Date de dépôt: 06.11.1998
(51) Int. Cl.: F02M 21/02, F02M 53/04

(54) **Dispositif d'injection de carburant pour moteur à combustion interne**

(30) Priorité: 10.11.1997 FR 9714097
(71) Demandeur: RENAULT, 92109 Boulogne-Billancourt (FR)
(72) Inventeur: Blanchard, Eric, 92380 Garches (FR); Menager, Jean-Luc, 92360 Meudon la Forêt (FR)
(74) Mandataire: Fernandez, Francis Lionel

(57) **Abrégé**

Dispositif d'injection de carburant dans un conduit d'admission d'un moteur à combustion interne, comprenant un injecteur dont le corps présente un nez traversé par un orifice de sortie du carburant, comprenant en outre un tube d'injection (15) qui prolonge le nez (12) dudit injecteur (6) et dont le canal (15a) est situé en face dudit orifice de sortie (9), ledit tube d'injection présentant une partie en porte-faux (21) s'étendant dans ledit conduit d'admission, ainsi que des moyens (18) empêchant au moins partiellement la formation de givre sur ledit tube d'injection

## Description

La présente invention concerne un dispositif d'injection de carburant dans un conduit d'admission d'un moteur à combustion interne.

Pour alimenter en carburant les moteurs à combustion interne, on utilise couramment des injecteurs en général électromagnétiques, comprenant un corps qui est fixé sur une rampe d'injection ou sur le répartiteur d'admission du moteur et qui présente un nez d'injection muni d'un orifice d'injection du carburant.

On a pu constater que les dispositifs d'injection proposés jusqu'à ce jour et résumés ci-après ne permettent pas de résoudre pleinement les problèmes que pose l'injection de certains carburants, tels que par exemple un gaz de pétrole liquéfié dénommé du GPL.

Afin d'éviter le réchauffement d'un tel carburant avant son injection dans le conduit d'admission du moteur, il a déjà été proposé d'utiliser un matériau peu conducteur de la chaleur pour la construction de la rampe d'injection, par exemple un polyamide. Cependant, on a pu constater que la température peu élevée du nez de l'injecteur favorise la formation de givre dans la zone de son orifice d'injection. Ce givre perturbe le contrôle des débits de carburant des injecteurs et par conséquent le bon fonctionnement du moteur.

On a également proposé de construire le répartiteur d'admission en un matériau peu conducteur de la chaleur, par exemple en un matériau composite. Dans ce cas cependant, l'air d'admission n'est pas réchauffé et se trouve être à une température faible dans la zone de détente du carburant, ce qui favorise également la formation de givre dans cette zone.

De plus, on a pu observer que le givre susceptible de se former se détache quelquefois et perturbe la combustion du carburant dans le moteur.

On a par ailleurs proposé de construire le collecteur d'admission ou la rampe d'injection en un alliage léger conducteur de la chaleur. Cette solution empêche la formation de givre dans la zone de l'orifice d'injection et dans la zone de détente du carburant dans le conduit d'admission. Cependant, le carburant liquide se trouve réchauffé par la chaleur du moteur et peut donc passer à un état gazeux avant son injection au travers du nez de l'injecteur. De plus, l'emploi d'un répartiteur d'admission en un alliage léger diminue sensiblement le remplissage du moteur par un réchauffement de l'air d'admission au contact du répartiteur d'admission.

La présente invention vise à améliorer les conditions d'injection de carburant, tel que du GPL, afin d'améliorer le fonctionnement des moteurs recevant un tel carburant.

Le dispositif d'injection de carburant dans un conduit d'admission d'un moteur à combustion interne, qui comprend un injecteur dont le corps présente un nez traversé par un orifice de sortie du carburant, comprend en outre, selon l'invention, un tube d'injection qui prolonge le nez dudit injecteur et dont le canal est situé en face dudit orifice de sortie, ledit tube d'injection présentant une partie en porte-faux s'étendant dans ledit conduit d'admission, ainsi que des moyens empêchant au moins partiellement la formation de givre sur ledit tube d'injection.

Selon une variante de l'invention, le tube d'injection est en un matériau hydrophobe empêchant la formation de givre.

Selon une autre variante de l'invention, le tube d'injection est thermiquement relié à une partie chaude du moteur.

Selon une autre variante de l'invention, le tube est muni d'ailettes périphériques.

Selon une autre variante de l'invention, le tube est équipé de moyens d'apport de chaleur.

Selon l'invention, lesdits moyens d'apport de chaleur peuvent comprendre au moins une résistance électrique chauffante disposée autour dudit tube d'injection.

Selon une exécution préférée de l'invention, le dispositif comprend un porte-injecteur au travers duquel est fixé ledit injecteur et qui porte la partie d'extrémité dudit tube d'injection adjacente au nez dudit injecteur.

Selon l'invention, ledit porte-injecteur comprend de préférence une paroi radiale d'extrémité qui présente un passage axial dans lequel est fixée ladite partie d'extrémité dudit tube d'injection, cette dernière étant en entrée contre la face frontale du nez dudit injecteur.

Selon une variante de l'invention, ledit tube d'injection présente une partie annulaire en saillie, s'étendant au moins partiellement à distance de ladite paroi radiale dudit porte-injecteur.

Selon l'invention, ladite partie annulaire en saillie peut avantageusement présenter une partie tronconique au moins partiellement en contact avec une partie chaude du moteur.

La présente invention sera mieux comprise à l'étude de différents dispositifs d'injection de carburant dans un moteur à combustion interne, décrits à titre d'exemples non limitatifs et illustrés par le dessin sur lequel :
- la figure 1 représente une coupe d'un premier dispositif d'injection ;
- la figure 2 représente en coupe un second dispositif d'injection selon la présente invention ;
- la figure 3 représente en coupe un troisième dispositif d'injection selon la présente invention ;
- et la figure 4 représente en coupe un quatrième dispositif d'injection selon la présente invention.

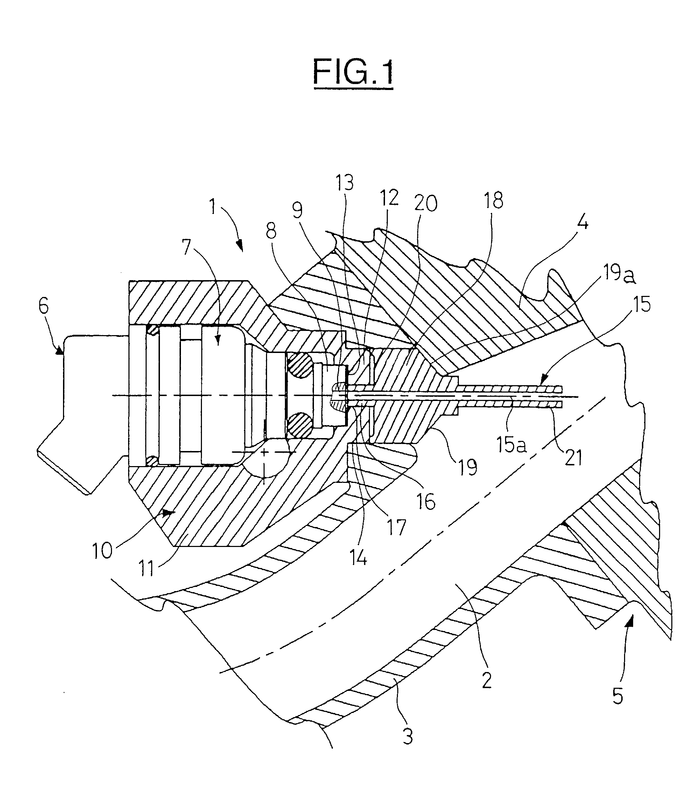

En se reportant à la figure 1, on voit qu'on a représenté schématiquement un premier dispositif d'injection, repéré d'une manière générale par la référence 1, qui permet d'injecter un carburant, tel que du GPL, dans un conduit d'admission 2 formé dans un répartiteur d'admission 3 et une culasse 4 d'un moteur à combustion interne 5, le répartiteur d'admission 3 étant en contact avec la culasse 4.

Le dispositif d'injection 1 comprend un injecteur électromagnétique 6 d'un type connu, dont le corps 7, généralement cylindrique, se termine par un nez 8 qui présente un orifice axial de sortie de carburant.

Le dispositif d'injection 1 comprend un porte-injecteur 10 qui présente une partie généralement cylindrique 11 dans laquelle est engagé par l'arrière et fixé par tous moyens connus habituels le corps 7 de l'injecteur 6 et une paroi radiale avant 12 en arrière de laquelle vient en butée la face frontale du nez 8 de l'injecteur 6.

Le répartiteur d'admission 3 comprend, dans sa partie adjacente à la culasse 4, un passage cylindrique traversant 14 dont l'axe forme un angle aigu avec l'axe du conduit d'admission 2, en direction de la culasse 4, et dans lequel est engagée, par l'extérieur, la partie avant du porte-injecteur 10 comprenant sa paroi radiale 12. Le porte-injecteur 10 est fixé au répartiteur d'admission 3 par tous moyens connus habituels.

Le dispositif d'injection 1 comprend en outre un tube d'injection 15 qui prolonge axialement le nez 8 de l'injecteur 6 au travers de la paroi radiale 12 du porte-injecteur 6 et qui s'étend axialement au travers du passage 14 du répartiteur d'admission 3 et dans le conduit d'admission 2 jusqu'au voisinage de l'axe de ce dernier. Le tube d'injection 15 comprend un canal axial 15a qui est situé en face de l'orifice 9 de la tête 8 de l'injecteur 6 et qui présente, de préférence, le même diamètre.

Le tube d'injection 15 présente une partie arrière cylindrique 16 qui s'étend au travers d'un passage 17 ménagé dans la paroi radiale 12 du porte-injecteur 10 de telle sorte que sa face d'extrémité arrière soit en appui contre la face frontale ou avant 13 du nez 8 de l'injecteur 6.

Le tube d'injection 15 présente, en avant de sa partie d'extrémité arrière 16, une partie annulaire en saillie 18 qui remplit la partie avant du passage 14 du répartiteur d'admission 3 et qui présente une face avant 19 conique ou d'une autre forme partiellement en contact avec une surface 19a de la culasse 4.

La face arrière de la partie annulaire en saillie 18 du tube d'injection 15 présente un évidement annulaire 20 permettant de limiter la surface de contact entre cette partie annulaire 18 et la face avant de la paroi radiale 12 du porte-injecteur 10 ou de supprimer ce contact.

En avant de sa partie annulaire en saillie 18, le tube d'injection 15 comprend une partie avant cylindrique 21 en porte-à-faux ou libre qui s'étend dans le conduit d'admission 2 et qui présente un diamètre extérieur sensiblement égal au diamètre extérieur de sa partie d'extrémité arrière 16.

Le dispositif d'injection 1 qui vient d'être décrit en référence à la figure 1 présente les avantages suivants.

Le corps 7 de l'injecteur 6 reçoit une quantité limitée de chaleur de la culasse 4 du fait qu'uniquement la partie avant du porte-injecteur 10 est en contact avec le répartiteur d'admission 3, de telle sorte que le carburant qui traverse le corps 7 de l'injecteur 6 jusqu'à son orifice de sortie 9 reste à l'abri d'un apport de chaleur produite par le moteur 5.

Le tube d'injection 15, dont la partie annulaire en saillie 18 est en contact partiel avec la culasse 4 par sa face frontale conique 19, établit un pont thermique entre le moteur et la zone de détente du carburant produisant une absorption de chaleur, de telle sorte que cet apport de chaleur permet d'éviter la formation de givre dans la zone de détente du carburant et notamment sur la partie du tube d'injection 15 qui s'étend dans le conduit d'admission 2. En outre, le tube d'injection 15 apporte une quantité réduite de chaleur au porte-injecteur 10 puisqu'il n'est en contact avec ces derniers que par des surfaces réduites, à savoir l'extrémité arrière du tube d'injection 15 et éventuellement la partie périphérique de l'évidement arrière 20 de sa partie en saillie 18.

Il résulte en outre de ce qui précède que le dispositif d'injection 1 permet de maintenir le carburant à injecter sous sa forme liquide au moins jusqu'à l'orifice de sortie 8 de l'injecteur 6, en conséquence sans occasionner de perturbation du fonctionnement de ce dernier, et qu'il permet en outre d'éviter toute formation de givre qui serait susceptible d'apparaître lors de la détente du carburant dans et à la sortie du tube d'injection 15.

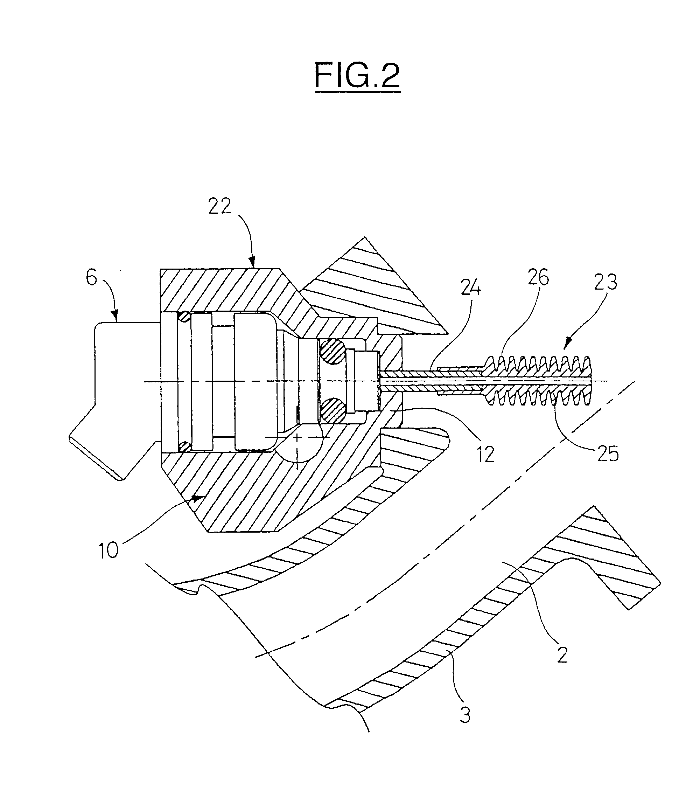

En se reportant à la figure 2, on voit qu'on a représenté un second dispositif d'injection de carburant, repéré d'une manière générale par la référence 22, qui ne se distingue du dispositif d'injection de carburant 1 décrit en référence à la figure 1 que par la structure de son tube d'injection 23.

Dans cet exemple, le tube d'injection 23, qui ne présente plus la partie annulaire en saillie 18 du tube d'injection 15 et qui n'est plus en contact avec ni le répartiteur d'admission 3 ni la culasse 4, présente une partie arrière 24, de section sensiblement constante et correspondant à sa partie d'extrémité arrière engagée dans la paroi radiale 12 du porte-injecteur 10 comme dans l'exemple précédent, ainsi qu'une partie avant 25 qui présente une multiplicité d'ailettes périphériques annulaires 26a situées dans le conduit d'admission 2.

Ces ailettes 26 du tube d'injection 23 sont susceptibles de capter de la chaleur régnant dans le conduit d'admission 2, les surfaces d'échanges devant être judicieusement fixées de façon à ne pas perturber le flux d'admission. Grâce à cet apport de chaleur au tube d'injection 23, la zone de détente du carburant se trouve à l'abri de toute formation de givre.

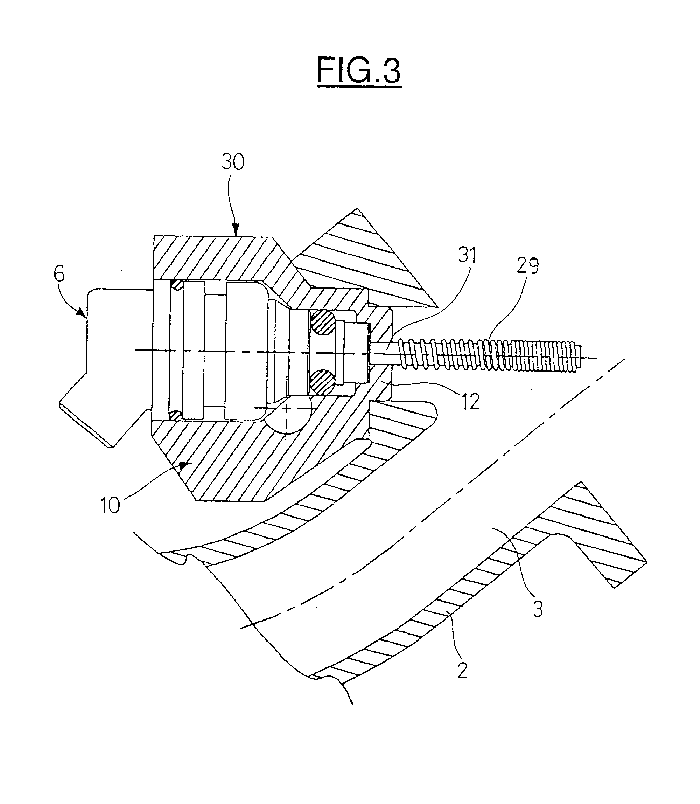

En se reportant maintenant à la figure 3, on voit qu'on a représenté un troisième dispositif d'injection, repéré d'une manière générale par la référence 27, qui ne se distingue des exemples précédents que par le fait qu'il comprend un tube d'injection 28, parfaitement cylindrique, autour duquel est enroulée, à partir de son extrémité libre et jusqu'à la paroi radiale 12 du porte injecteur 11, une résistance électrique filaire 29 dans laquelle peut circuler un courant électrique susceptible d'apporter par effet joule de la chaleur au tube d'injection 28, de telle sorte que ce dernier soit maintenu à une température suffisante pour éviter la formation de givre dans la zone de détente du carburant.

Les fils d'alimentation par l'extérieur de la résistance électrique 29 peuvent être prévus classiquement, de préférence au travers de la paroi du porte-injecteur 10 et de façon étanche de telle sorte que le dispositif d'injection 27 peut ainsi constituer une unité formée de l'injecteur 6, du porte-injecteur 10, du tube d'injection 28 et de la résistance électrique 29, assemblés comme décrit précédemment.

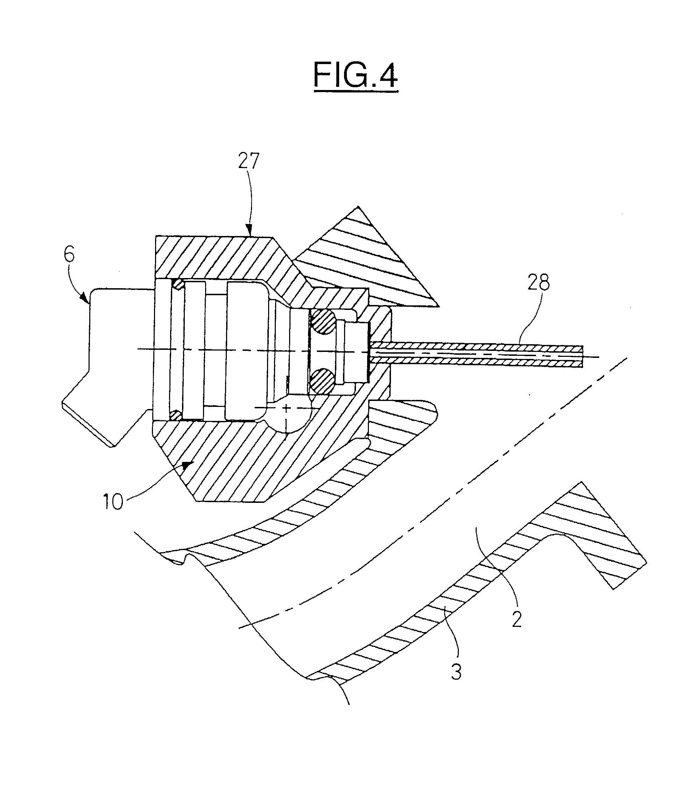

En se reportant maintenant à la figure 4, on voit qu'on a représenté un quatrième dispositif d'injection repéré d'une manière générale par la référence 30, qui ne se distingue des exemples précédents que par le fait qu'il comprend un tube d'injection 28 parfaitement cylindrique, qui est constitué en un matériau hydrophobe, c'est-à-dire en un matériau empêchant la présence d'humidité sur sa paroi, ce qui évite la formation de givre dans la zone de détente du carburant. En exemple, le matériau constituant le tube d'injection 28 peut être en polymère fluoré.

Par ailleurs, les dispositifs d'injection 22, 27 et 30 décrits en référence aux figures 2, 3 et 4 présentent le même avantage que le dispositif d'injection 1 décrit en référence à la figure 1 en ce qui concerne le maintien du carburant à l'état liquide dans l'injecteur 6.

La présente invention ne se limite pas aux exemples ci-dessus décrits. Bien d'autres variantes, susceptibles également d'améliorer le fonctionnement des moteurs à combustion interne alimentés en carburant tel que du GPL, sont possibles sans sortir du cadre de la présente invention.

## Revendications

1. Dispositif d'injection de carburant dans un conduit d'admission d'un moteur à combustion interne, comprenant un injecteur dont le corps présente un nez traversé par un orifice de sortie du carburant, caractérisé par le fait qu'il comprend en outre un tube d'injection (15) qui prolonge le nez (12) dudit injecteur (6) et dont le canal (15a) est situé en face dudit orifice de sortie (9), ledit tube d'injection présentant une partie en porte-faux (21) s'étendant dans ledit conduit d'admission, ainsi que des moyens (18) empêchant au moins partiellement la formation de givre sur ledit tube d'injection.

2. Dispositif selon la revendication 1, caractérisé par le fait que ledit tube d'injection (31) est en un matériau hydrophobe empêchant la formation de givre.

3. Dispositif selon la revendication 1, caractérisé par le fait que le tube d'injection (15) est thermiquement relié à une partie chaude (4) du moteur.

4. Dispositif selon la revendication 1, caractérisé par le fait que le tube est muni d'ailettes périphériques (26).

5. Dispositif selon la revendication 1, caractérisé par le fait que le tube d'injection est équipé de moyens d'apport de chaleur (18, 29).

6. Dispositif selon la revendication 5, caractérisé par le fait que lesdits moyens d'apport de chaleur comprennent au moins une résistance électrique chauffante (29) disposée autour dudit tube d'injection.

7. Dispositif selon l'une quelconque des revendications précédentes, caractérisé par le fait qu'il comprend un porte-injecteur (10) au travers duquel est fixé ledit injecteur (6) et qui porte la partie d'extrémité (16) dudit tube d'injection (15) adjacente au nez (8) dudit injecteur (6).

8. Dispositif selon la revendication 7, caractérisé par le fait que ledit porte-injecteur (10) comprend une paroi radiale d'extrémité avant (12) qui présente un passage axial (17) dans lequel est fixée ladite partie d'extrémité (16) dudit tube d'injection, cette dernière étant en entrée contre la face frontale du nez (8) dudit injecteur (6).

9. Dispositif selon la revendication 8, caractérisé par le fait que ledit tube d'injection (15) présente une partie annulaire en saillie (18), s'étendant au moins partiellement à distance de ladite paroi radiale (12) dudit porte-injecteur (10).

10. Dispositif selon la revendication 9, caractérisé par le fait que ladite partie annulaire en saillie (18) présente une partie de préférence tronconique (19) au moins partiellement en contact avec une partie chaude (4) du moteur.
